(19) Europäisches Patentamt
European Patent Office
Office européen des brevets

(11) EP 1 139 467 A2

(12) **EUROPÄISCHE PATENTANMELDUNG**

(43) Veröffentlichungstag:
**04.10.2001 Patentblatt 2001/40**

(51) Int Cl.[7]: **H01M 4/50**, H01M 10/40

(21) Anmeldenummer: **01104584.6**

(22) Anmeldetag: **06.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **31.03.2000 DE 10016024**

(71) Anmelder: **MERCK PATENT GmbH**
**64293 Darmstadt (DE)**

(72) Erfinder:
- **Heider, Lilia**
  **64560 Riedstadt (DE)**
- **Heider, Udo**
  **64560 Riedstadt (DE)**
- **Lotz, Natascha**
  **64390 Erzhausen (DE)**
- **Rothenberger, Mathias**
  **55128 Mainz (DE)**

Bemerkungen:
Ein Antrag gemäss Regel 88 EPÜ auf Berichtigung der Ansprüche liegt vor. Über diesen Antrag wird im Laufe des Verfahrens vor der Prüfungsabteilung eine Entscheidung getroffen werden (Richtlinien für die Prüfung im EPA, A-V, 3.).

# (54) Aktives Anodenmaterial in elektrochemischen Zellen und Verfahren zu deren Herstellung

(57) Die Erfindung betrifft neuartige Materialien auf Basis von beschichteten Metallpartikeln zur Verwendung als aktives Anodenmaterial in elektrochemischen Zellen.

EP 1 139 467 A2

## Beschreibung

Die Erfindung betrifft neuartige Materialien auf Basis von beschichteten Metallkernen wie z.B. Sb, Bi, Cd, In, Pb, Ga oder Zinnpartikeln oder deren Legierungen zur Verwendung als aktives Anodenmaterial in elektrochemischen Zellen.

Lithium-Ionen-Batterien gehören zu den aussichtsreichsten Systemen für mobile Anwendungen. Die Einsatzgebiete reichen dabei von hochwertigen Elektronikgeräten (z.B. Mobiltelefone, Camcorder) bis hin zu Batterien für Kraftfahrzeuge mit Elektroantrieb.

Diese Batterien bestehen aus Kathode, Anode, Separator und einem nichtwäßrigen Elektrolyt. Als Kathode werden typischerweise $Li(MnMe_z)_2O_4$, $Li(CoMe_z)O_2$, $Li(CoNi_xMe_z)O_2$ oder andere Lithium-Interkalations und Insertions-Verbindungen verwendet. Anoden können aus Lithium-Metall, weichen und harten Kohlenstoffen, Graphit, graphitischen Kohlenstoffen oder andere Lithium-Interkalations und Insertions-Verbindungen oder Legierungsverbindungen bestehen. Als Elektrolyt werden Lösungen mit Lithiumsalzen wie $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen in aprotischen Lösungsmitteln verwendet.

In den aktuell kommerziell verfügbaren Lithium ionen Batterien wird als Anode Kohlenstoff eingesetzt. Allerdings weist dieses Anodensystem einige Probleme auf. In diesem System tritt ein hoher Kapazitätsverlust während des 1. Zyklus auf, der durch einen irreversilben Einbau von Lithium in die Kohlenstoffstruktur zustande kommt. Weiterhin ist die Zyklenstabilität der zur Verfügung stehenden Kohlenstoffe bzw. Graphite nicht zufriedenstellend. Ferner kommt der Sicherheitsaspekt hinzu, der durch kinetische Begrenzungen kritische Parameter hervorrufen kann.

Zur Reduzierung des irreversiblen Kapazitätsverlustes im 1. Ladezyklus werden neue Systeme gesucht, die z.B. die Kohlenstoffanode ersetzen. Hier werden vielfältige Anstrengungen unternommen. Die Kohlenstoffmaterialien werden z.B. durch oxidische Materialien oder Legierungen ersetzt. Wolfenstine untersucht in Journal of Power Sources 75 (1998) die Eignung von Zinnoxid-Zinn Mischungen als Anodenmaterial für Lithium-Ionen-Batterien. Der irreversible Li Verlust durch $Li_2O$-Bildung soll durch die bevorzugt Verwendung von SnO gegenüber $SnO_2$ minimiert werden. In EP 0823741 werden mit verschiedenen Metallen dotierte Zinn-Mischoxide beschrieben. Auch in US 5654114 wird die Verwendung von Zinnoxiden als Anodenmaterial für sekundäre Lithium-Ionen-Batterien beschrieben. Alle untersuchten Systeme weisen den Mangel auf, daß Li zu $Li_2O$ umgesetzt wird. Dadurch wird eine große Menge Li gebunden, was für die elektrochemischen Prozesse in der Batterie nicht mehr zur Verfügung steht.

Aufgabe der vorliegenden Erfindung ist es, Anodenmaterialien zur Verfügung zu stellen, die eine höhere Kapazität im Vergleich zum Kohlenstoff bieten. Außerdem soll der irreversible Verlust von Lithium minimiert und eine gute Zyklenstabilität erreicht werden.

Die erfindungsgemäße Aufgabe wird gelöst durch den Einsatz von beschichteten Metallkernen wie z.B. Sb, Bi, Cd, In, Pb, Ga oder Zinnpartikeln sowie deren Legierungen, besonders bevorzugt Zinnpartikel, die als Anodenmaterial in elektrochemischen Zellen verwendet werden.

Es wurde gefunden, daß definierte Metalloxidschichten auf dem Metall bzw. Legierungskern aufgebracht werden können.

Überraschend wurde gefunden, daß die beschichteten Metall bzw. Legierungspartikel, im besonderen Zinnpartikel, hervorragende elektrochemische Eigenschaften aufweisen. Der irreversible Lithium-Verlust über den 1. Zyklus ist deutlich geringer als bei herkömmlichen oxidischen Anodenmaterialien.

Die im Stand der Technik beschriebenen Verwendungen von Zinnoxiden für Anodenmaterialien weisen das Problem der Partikelagglomeration auf. Überraschend wurde gefunden, daß mit dem erfindungsgemäßen Verfahren Partikel mit definiertem Durchmesser hergestellt werden können. Mit dem erfindungsgemäßen Verfahren können Primärpartikel im nm-Bereich und Sekundärpartikel mit einem Durchmesser unter 10 $\mu m$ hergestellt werden. Diese kleinen Partikel führen zur Vergrößerung der aktiven Oberfläche.

Es wurde gefunden, daß die definierte Beschichtung der Primärpartikel mit einer Oxidschicht zu einem definierten Sauerstoffgehalt führt. Hierdurch kann die Bildung von $Li_2O$ reguliert werden.

Es können ein- oder mehrfach Beschichtungen mit Metallhydroxiden oder Metalloxyhydroxiden, die dann durch Temperaturbehandlung in die Oxide überführt werden, erfolgen.

Verfahren zur Herstellung des Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. - oxyhydroxide in das entsprechende Oxid übergeführt werden.

Es wurde gefunden, daß zur Beschichtung besonders Zinn-, Molybdän-, Cer-, Wolfram- und Antimonhydroxide oder - oxihydroxide, die durch eine Temperaturbehandlung in die Oxide überführt werden, geeignet sind. Hierbei ist es egal, ob bei der mehrfachen Beschichtung mit dem selben Oxid oder verschiedenen Oxiden beschichtet wird.

Bei der Verwendung der beschichteten Metall- bzw. Legierungspartikel, im besonderen der Zinnpartikel, als Anodenmaterial in elektrochemischen Zellen wurde eine verbesserte Zyklisierbarkeit durch den Aufbau definierter Metalloxidschichten festgestellt. Die erfindungsgemäßen Materialien sind bevorzugt für den Einsatz in elektrochemischen Zellen, Batterien, besonders bevorzugt in sekundären Lithium-Ionen-Batterien, geeignet.

Das erfindungsgemäße Anodenmaterial kann in sekundären Lithium-Ionen-Batterien mit gängigen Elektrolyten eingesetzt werden. Geeignet sind z.B. Elektrolyte mit Leitsalzen ausgewählt aus der Gruppe $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen. Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

$$Li^+ B^-(OR^1)_m(OR^2)_p$$

worin,

m und p 0, 1, 2, 3 oder 4 mit m+p=4 und
$R^1$ und $R^2$ gleich oder verschieden sind,

gegebenenfalls durch eine Einfach- oder Doppelbindung direkt miteinander verbunden sind,
jeweils einzeln oder gemeinsam die Bedeutung eines aromatischen oder aliphatischen Carbon-, Dicarbon- oder Sulfonsäurerestes haben, oder
jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder
jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder
jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder einbis vierfach durch A oder Hal substituiert sein kann, haben und

Hal F, Cl oder Br

und

A Alkyl mit 1 bis 6 C-Atomen, das ein- bis dreifach halogeniert

sein kann, bedeuten. Ebenso geeignet sind Alkalialkoholate der allgemeinen Formel

$$Li^+ OR^-$$

sind, worin R
die Bedeutung eines aromatischen oder aliphatischen Carbon-, Dicarbon- oder Sulfonsäurerestes hat, oder
die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder
die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder
die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann, hat und

Hal F, Cl, oder Br,

und

A Alkyl mit 1 bis 6 C-Atomen, das ein- bis dreifach halogeniert

sein kann.

Auch Lithiumkomplexsalze der Formel

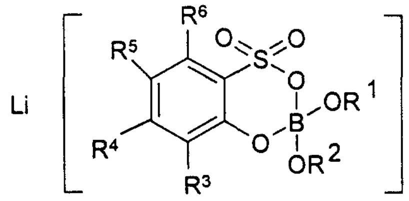

wobei

$R^1$ und $R^2$ gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann, haben,

oder jeweils einzeln oder gemeinsam die Bedeutung eines aromatischen heterozyklischen Rings aus der Gruppe Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

$R^3$-$R^6$ können jeweils einzeln oder paarweise, gegebenenfalls durch eine Einfach oder Doppelbindung direkt miteinander verbunden, folgende Bedeutung haben:

1. Alkyl ($C_1$ bis $C_6$),Alkyloxy ($C_1$ bis $C_6$) oder Halogen (F, Cl, Br)

2. ein aromatischer Ring aus den Gruppen Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,
Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,

die über folgendes Verfahren (DE 199 32 317) dargestellt werden

a) 3-, 4-, 5-, 6-substituiertes Phenol in einem geeigneten Lösungsmittel mit Chlorsulfonsäure versetzt wird,

b) das Zwischenprodukt aus a) mit Chlortrimethylsilan umgesetzt, filtriert und fraktioniert destilliert wird,

c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Ebenso können die Elektrolyte Verbindungen der folgenden Formel (DE 199 41 566)

$$[([R^1(CR^2R^3)_k]_lA_x)_yKt]^{+}\ {}^{-}N(CF_3)_2$$

wobei

Kt= N, P, As, Sb, S, Se

A= N, P, P(O), O, S, S(O), $SO_2$, As, As(O), Sb, Sb(O)

$R^1$, $R^2$ und $R^3$
gleich oder verschieden
H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,
A kann in verschiedenen Stellungen in $R^1$, $R^2$ und/oder $R^3$ eingeschlossen sein,
Kt kann in cyclischen oder heterocyclischen Ring eingeschlossen sein,
die an Kt gebundenen Gruppen können gleich oder verschieden sein mit

n= 1-18

m= 3-7

k= 0, 1-6

l= 1 oder 2 im Fall von x=1 und 1 im Fall x=0

x= 0,1

y= 1-4

bedeuten, enthalten. Das Verfahren zur Herstellung dieser Verbindungen ist dadurch gekennzeichnet, daß ein Alkalisalz der allgemeinen Formel

$$D^{+}\ {}^{-}N(CF_3)_2 \qquad (II)$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^{+}\ {}^{-}E \qquad (III)$$

wobei
Kt, A, $R^1$, $R^2$, $R^3$, k, l, x und y die oben angegebene Bedeutung haben und

$^-E$ $F^-$, $Cl^-$, $Br^-$, $I^-$, $BF_4^-$, $ClO_4^-$, $AsF_6^-$, $SbF_6^-$ oder $PF_6^-$

bedeutet, umgesetzt wird.

Aber auch Elektrolyte enthaltend Verbindungen der allgemeinen Formel (DE 199 53 638)

$$X\text{-}(CYZ)_m\text{-}SO_2N(CR^1R^2R^3)_2$$

mit

X H, F, Cl, $C_nF_{2n+1}$, $C_nF_{2n-1}$, $(SO_2)_kN(CR^1R^2R^3)_2$

Y H, F, Cl

Z H, F, Cl

$R^1$, $R^2$, $R^3$ H und/oder Alkyl, Fluoralkyl, Cycloalkyl

m 0-9 und falls X=H, m≠0

n 1-9

k 0, falls m=0 und k=1, falls m=1-9,

hergestellt durch die Umsetzung von teil- oder perfluorierten Alkysulfonylfluoriden mit Dimethylamin in organischen Lösungsmitteln sowie Komplexsalze der allgemeinen Formel (DE 199 51 804)

$$M^{x+}[EZ]^{y-}_{x/y}$$

worin bedeuten:

x, y 1, 2, 3, 4, 5, 6

$M^{x+}$ ein Metallion

E einer Lewis-Säure, ausgewählt aus der Gruppe $BR^1R^2R^3$, $AlR^1R^2R^3$, $PR^1R^2R^3R^4R^5$, $AsR^1R^2R^3R^4R^5$, $VR^1R^2R^3R^4R^5$,

$R^1$ bis $R^5$ gleich oder verschieden, gegebenenfalls durch eine Einfach- oder Doppelbildung direkt miteinander verbunden sind, jeweils einzeln oder gemeinsam die Bedeutung

eines Halogens (F, Cl, Br),

eines Alkyl- oder Alkoxyrestes ($C_1$ bis $C_8$) der teilweise oder vollständig durch F, Cl, Br substituiert sein kann,

eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann

eines, gegebenenfalls über Sauerstoff gebundenen aromatischen heterozyklischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und

Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei

$R^6$ bis $R^8$ gleich oder verschieden sind, gegebenenfalls durch eine Einfach- oder Doppelbindung direkt miteinander verbunden sind, jeweils einzeln oder gemeinsam die Bedeutung

eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel

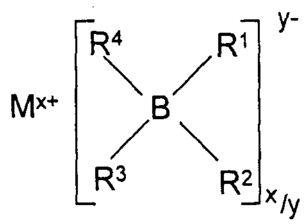

worin bedeuten:

M ein Metallion oder Tetraalkylammoniumion

x,y 1, 2, 3, 4, 5 oder 6

$R^1$ bis $R^4$ gleich oder verschieden, gegebenenfalls durch eine Einfach- oder Doppelbindung direkt miteinander verbunder Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Ebenso können die erfindungsgemäßen Anodenmaterialien in Systemen mit polymerbeschichteten Lithium-Mischoxid-Partikeln für Kathodenmaterialien (DE 19946066) eingesetzt werden. Das Verfahren zur Herstellung von mit einem oder mehreren Polymeren beschichteten Lithium-Mischoxid-Partikeln ist dadurch gekennzeichnet, daß die Partikel in einem Lösungsmittel suspendiert werden und danach die beschichteten Partikel abfiltriert, getrocknet und gegebenenfalls calciniert werden. Auch können die erfindungsgemäßen Anodenmaterialien in Systemen mit Kathoden eingesetzt werden, die aus Lithium-Mischoxid-Partikeln bestehen, die mit einem oder mehreren Metalloxiden beschichtet sind (DE 19922522). Das Verfahren zur Herstellung von mit einem oder mehreren Metalloxiden beschichteten Lithium-Mischoxid-Partikeln ist dadurch gekennzeichnet, daß die Partikel in einem organischen Lösungsmittel suspendiert werden, die Suspension mit einer Lösung einer hydrolysierbaren Metallverbindung und einer Hydrolyselösung versetzt und danach die beschichteten Partikel abfiltriert, getrocknet und gegebenenfalls calciniert werden.

Ebenso können die erfindungsgemäßen Anodenmaterialien in Systemen mit Kathoden eingesetzt werden, die aus Lithium-Mischoxid-Partikeln bestehen, die mit Alkalimetallverbindungen und Metalloxiden ein- oder mehrfach beschichtet sind. Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden.

Nachfolgend wird ein allgemeines Beispiel der Erfindung näher erläutert.

Als Ausgangsverbindungen werden 1 - 2 Molare, bevorzugt 2 Molare, Zinntetrachlorid-Lösungen eingesetzt. Die Konzentration bei den Systemen mit Sb, Bi, Cd, In, Pb oder Ga kann ebenfalls im oben genannten molaren Bereich liegen, sie kann aber auch niedriger bzw. höher angesetzt werden, vorzugsweise zwischen 0,1 - 3 Molar, bevorzugt 2 Molar. Bei anderen oxidischen Beschichtungen können die entsprechenden Salzlösungen, insbesondere Chloride der Elemente Ce, Mo, W und Sb oder organische Verbindungen dieser Elemente eingesetzt werden.Die Lösung wird unter Kühlung und intensivem Rühren in Wasser gegeben. Der entstehende weiße Niederschlag im Falle des Sn-Systems wird durch Erwärmung aufgelöst. Im Falle der anderen Systeme können Niederschäge entstehen, sind aber nicht generell zu beobachten. Nach dem Abkühlen auf Raumtemperatur wird die dem System entsprechende Harnstoffmenge zugegeben und vollständig gelöst. Die Zugabe des Harnstoffs bzw. das Lösungsverhalten ist System-abhängig. Durch Zugabe von Wasser wird die gewünschte Konzentration der Lösung eingestellt (siehe Angabe oben). Die Lösung wird auf Temperaturen zwischen 0 und 10°C, bevorzugt auf 5-7°C, gekühlt. Im Verhältnis 1:1 wird eine 3,5Molare Hexamethylentetramin-Lösung zugegeben. Das Verhältnis gilt wiederum für das Zinnsystem und kann bei den anderen Elementen entsprechend variiert werden. Es kann auch mit 10% Unter- oder Überschuß an Hexamethylentetramin gearbeitet werden. Das Gemisch wird solange gerührt, bis das Sol klar ist. Es werden als Trägermedium Zinn, Sb, Bi, Cd, In, Pb, Ga oder Legierungspartikel, entsprechend der gewünschten Partikelmorphologie zwischen 0 und 70%, zugegeben.

Benzin (Petrolether) wird mit 0,5 bis 1,5%, bevorzugt 0,7%, handelsüblichen Emulgatoren, bevorzugt mit Span 80, versetzt. Die Lösung wird auf Temperaturen zwischen 30°C und 70°C, bevorzugt auf 50°C, erwärmt. Die oben beschriebene Lösung wird unter ständigem Rühren zugegeben. Das sich bildende Gel wird nach 3 bis 20 min, bevorzugt nach 10 min, mit einer Ammoniak-Lösung versetzt und der pH Wert derartig stabilisiert, daß keine Peptisation des Gels stattfindet. Nach dem Dekantieren der organischen Phase wird mit einem geeigneten organischen Lösungsmittel, bevorzugt mit Petrolether, gewaschen. Zum Entfernen des Emulgators und organischer Verunreinigungen wird die Lösung anschließend mit Detergenzien, vorzugsweise mit Triton, versetzt. Die Lösung wird abgesaugt und das Gel mit Wasser und Aceton gewaschen.

Das Gel wird getrocknet und gegebenenfalls getempert. Wird ein SnO-System gewünscht reicht eine Trocknung bis maximal 230°C, bevorzugt bei 75°C bis 110°C. Wird ein $SnO_2$-System gewünscht erfolgt nach der Trocknung eine Temperung. Die Temperung wird bei Temperaturen zwischen 350 und 1000°C, bevorzugt bei Temperaturen zwischen 55 und 750°C, ganz besonders bevorzugt bei 650°C, durchgeführt. Getempert wird zwischen 10 min und 5 Stunden, bevorzugt zwischen 90 min und 3 Stunden, ganz besonders bevorzugt 2 Stunden. Die anderen oxidischen Systeme werden in den element-spezifischen Temperaturbereichen getrocknet und auf diese Weise der Oxidationsgrad eingestellt.

Alternativ können die beschichteten Partikel auch über ein Fällungsverfahren hergestellt werden. Dies gilt für alle oben aufgeführten Elemente.

Im nachfolgenden Beispiel wird das Zinn-System genauer beschrieben.

Zinndichlorid und/oder Zinntetrachlorid werden eingewogen und in konzentrierter Salzsäure gelöst. Die Lösung wird anschließend mit Wasser versetzt.

Es wird entsalztes Wasser vorgelegt und auf Temperaturen zwischen 50°C und 90°C, bevorzugt auf 75°C, erwärmt. Nach Zugabe des Trägermaterials, wie z.B. Zinn, wird durch Zugabe von Salzsäure ein geeigneter pH-Wert eingestellt. Für ein SnO-System wird ein pH-Wert zwischen 9,5 und 10,5, bevorzugt von 10,0, eingestellt. Für ein $SnO_2$-System wird ein pH-Wert zwischen 1,5 und 2,5, bevorzugt von 2,1, eingestellt. Während der Zugabe eines Fällungsreagenzes aus der Gruppe der Basen und Wasser, bevorzugt Natronlauge und Ammoniak, wird der pH-Wert durch Zugabe von *Basen,* bevorzugt Natronlauge, konstant gehalten.

Der Niederschlag wird abfiltriert. Die weitere Aufarbeitung mittels Trocknung und gegebenenfalls Temperung ist adäquat der Aufbereitung nach dem Sol-Gel-Verfahren.

Die nachfolgenden Beispiele sollen die Erfindung näher erläutern, ohne sie jedoch zu beschränken.

Beispiele

Beispiel 1

**Sol-Gel Synthese**

**Lösung 1:**

In einem Vierhalskolben mit Rührer werden 250 ml Wasser vorgelegt. Unter intensivem Rühren (350 U/min) und Eiskühlung werden innerhalb von 90 min 235 ml $SnCl_4$ zugetropft. Es bildete sich ein weißer unlöslicher Niederschlag, der sich auch nach 3 Tagen intensivem Rühren nicht auflöst. Die Lösung wird erwärmt. Bereits bei 50°C kann der einsetzende Lösevorgang beobachtet werden. Die Erwärmung erfolgt über 60 min und wird nach vollständiger Auflösung des Niederschlages und Erreichen der Siedetemperatur (122°C) beendet. Nach dem Abkühlen auf Raumtemperatur werden 600 g Harnstoff eingetragen und vollständig aufgelöst. Der endotherme Lösevorgang führt zu einer klaren hochviskosen Lösung, die mit Wasser zu einem Liter Lösung aufgefüllt wird.

Beispiel 2

**Lösung 2:**

Zum Herstellen der Lösung 2 werden 490 g Urotropin (Hexamethylentetramin=HMT) mit 600 ml Wasser im Becherglas auf dem Magnetrührmotor gelöst und nach erfolgtem leicht exothermen Auflösen zu einem Liter leicht grünlich-trüber Lösung aufgefüllt. 38,5 ml Lösung 1 (0,077 mol= 11,6 g $SnO_2$) werden 4 min in einem 250 ml Becherglas im Eisbad vorgekühlt. Nach Zusatz von 22 ml Lösung 2 (0,077 mol) wird 3 min lang bei 50°C und 350 U/min (Rührer zweiblättrig, 4 cm) gerührt bis das Sol klar ist. Dann werden 2,9 g Zinn zugegeben und kurz verrührt. Das Gemisch ist grau gefärbt und wird direkt emulgiert.

Beispiel 3

**Emulsionsbildung:**

Im 1 Liter Becherglas werden 2,0 g Span80 (= 0,74%) mit 400 ml Benzin versetzt und bei 350 U/min vermischt. Die Temperatur wird mittels eines Wasserbades auf 50°C eingestellt.
Das in Beispiel 2 beschriebene, frisch angesetzte Gemisch wird bei 400 U/min zugegeben und emulgiert. Nach ca. 1,5 min entsteht das Gel.
Nach 10 min werden 10 ml 1%-iger Ammoniak zugegeben und noch weitere 6 min bei 400 U/min emulgiert. Dabei entsteht ein moosgrünes Gel.

Beispiel 4

**Phasentrennung und Extraktion:**

Die organische Benzin-Phase wird dekantiert und mit 2 x 35 ml Petrolether nachgewaschen und getrennt. Zum Entfernen des Emulgators wird das Gel mit 30 ml Triton-Lösung (Konzentration der Triotonlösungen kann dem System angepasst werden) versetzt und 6 min im Becherglas aufgeschlämmt. Das Gemisch wird über eine Nutsche abgesaugt und mit 200 ml Wasser nachgewaschen. Danach wird mit Aceton überschichtet und exakt 15 min abgesaugt.

Beispiel 5

**Trocknung und Temperung:**

Es wird einen Tag an der Luft und einen Tag im Trockenschrank bei 60°C getrocknet.
Aussehen vor dem Tempern:

grün: Kugeln mit dunklen Partikeln (Schokomuffin) ~40 µm
grau: Kugeln mit mehr dunklen Partikeln
Temperung: Programm: 20°C→180 min→650°C/120 min→20°C
Aussehen: fast unverändert

REM Untersuchungen zeigen sphärische Partikel mit kleinen Rissen.

Beispiel 6

**Fällungsreaktion**

In einem 500 ml Rundkolben werden Zinndichlorid und Zinntetrachlorid eingewogen und in konzentrierter Salzsäure aufgelöst. Langsam wird die Lösung mit $H_2O$ versetzt. Vor dem Reaktionsbeginn wird die Dosierpumpe mit Fällungslösung gespült.
In einem Reaktionsgefäß werden 2 l entsalztes Wasser vorgelegt und auf 75°C erhitzt. Nach dem Erreichen der Reaktionstemperatur wird das Trägermaterial Zinn eingetragen. Durch tropfenweise Zugabe von 10%-iger Salzsäure wird der pH-Wert 2,1 eingestellt. Die Fällungslösung (Zinnlösung) wird mit einer Dosiergeschwindigkeit von 1-2 ml/min am Gefäßboden zudosiert, der pH-Wert wird durch Zugabe von 32%-iger Natronlauge konstant gehalten. Die Natronlauge wird hierbei über dem Flüssigkeitsspiegel zudosiert. Es bildet sich ein gelblich weißer Niederschlag.
Die Aufbereitung des Niederschlages erfolgt entsprechend Beispiel 5.

Beispiel 7

**Kapazität**

Bei den Referenzmessungen wurde Kaufware $SnO_2$ eingesetzt.

| | | Entladen [mAh/g] | Laden [mAh/g] | irreversible Kapazität [%] |
|---|---|---|---|---|
| Referenz 1 | Zelle 1 | 652 | 409 | 37,3 |
| | Zelle 2 | 595 | 325 | 45,4 |
| Referenz 2 | Zelle 1 | 481 | 314 | 34,7 |
| | Zelle 2 | 516 | 395 | 23,5 |
| sphärisches Sn-$SnO_2$ | Zelle 1 | 612 | 538 | 13,4 |
| | Zelle 2 | 590 | 543 | 7,85 |

Die meßbare Kapazität des sphärischen Sn-$SnO_2$-Systems ist mit dem der Kaufware vergleichbar. Die irreversible Kapazität des sphärischen Sn-$SnO_2$-Systems ist jedoch deutlich niedriger.

**Patentansprüche**

**1.** Anodenmaterial, bestehend aus beschichteten Metallkernen, ausgewählt aus der Gruppe Sb, Bi, Cd, In, Pb, Ga und Zinn oder deren Legierungen.

**2.** Anodenmaterial gemäß Anspruch 1, **dadurch gekennzeichnet, daß** der beschichtete Metallkern Zinn ist.

**3.** Anodenmaterial gemäß der Ansprüche 1 und 2, **dadurch gekennzeichnet, daß** die Beschichtungen ausgewählt sind aus der Gruppe der Metallhydroxide oder Metalloxyhydroxide, die in die Oxide überführt worden sind.

**4.** Anodenmaterial gemäß der Ansprüche 1 bis 3, **dadurch gekennzeichnet, daß** die Beschichtungen ausgewählt aus der Gruppe der Zinn-, Molybdän-, Cer-, Wolfram- oder Antimonhydroxide oder -oxyhydroxide, die in die Oxide überführt worden sind.

**5.** Anodenmaterial gemäß der Ansprüche 1 bis 4, **dadurch gekennzeichnet, daß** die Metall- bzw. Legierungspartikel ein- oder mehrfach beschichtet werden.

**6.** Verfahren zur Herstellung des Anodenmaterials gemäß der Ansprüche 1 bis 5, **dadurch gekennzeichnet, daß**

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. - oxyhydroxide in das entsprechende Oxid übergeführt werden.

**6.** Elektrochemische Zelle bestehend aus Kathode, Anode, Separator und Elektrolyt, **dadurch gekennzeichnet, daß** die Anode Anodenmaterial gemäß der Ansprüche 1 bis 5 enthält.

**7.** Verwendung von Anodenmaterial mit definierten Metalloxidschichten gemäß der Ansprüche 1-5 in elektrochemischen Zellen zur Verbesserung der Zyklisierbarkeit der Anode.

**8.** Verwendung von Anodenmaterial gemäß der Ansprüche 1 bis 5 in elektrochemischen Zellen, Batterien und sekundären Lithiumbatterien.